(19) Europäisches Patentamt
European Patent Office
Office européen des brevets

(11) **EP 2 962 161 B1**

(12) **EUROPÄISCHE PATENTSCHRIFT**

(45) Veröffentlichungstag und Bekanntmachung des Hinweises auf die Patenterteilung:
**19.07.2017 Patentblatt 2017/29**

(21) Anmeldenummer: **14707677.2**

(22) Anmeldetag: **19.02.2014**

(51) Int Cl.:
*G05B 13/02* (2006.01)    *G06F 17/16* (2006.01)
*G06N 3/12* (2006.01)    *G05B 11/42* (2006.01)
*G05B 17/02* (2006.01)    *G05B 13/04* (2006.01)

(86) Internationale Anmeldenummer:
**PCT/EP2014/053180**

(87) Internationale Veröffentlichungsnummer:
**WO 2014/131661 (04.09.2014 Gazette 2014/36)**

(54) **VERFAHREN ZUM ENTWERFEN EINES NICHTLINEAREN REGLERS FÜR NICHTLINEARE PROZESSE**

METHOD FOR DESIGNING A NONLINEAR CONTROLLER FOR NONLINEAR PROCESSES

PROCÉDÉ DE CONCEPTION D'UN RÉGULATEUR NON LINÉAIRE POUR PROCESSUS NON LINÉAIRES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **28.02.2013 AT 501292013**

(43) Veröffentlichungstag der Anmeldung:
**06.01.2016 Patentblatt 2016/01**

(73) Patentinhaber: **AVL List GmbH**
**8020 Graz (AT)**

(72) Erfinder:
• **MAYR, Christian**
**A-3493 Hadersdorf am Kamp (AT)**
• **JAKUBEK, Stefan**
**A-1230 Wien (AT)**
• **HAMETNER, Christoph**
**A-1020 Wien (AT)**
• **KEUTH, Nikolaus**
**A-8043 Graz (AT)**

(74) Vertreter: **Patentanwälte Pinter & Weiss OG**
**Prinz-Eugen-Straße 70**
**1040 Wien (AT)**

(56) Entgegenhaltungen:
**EP-A2- 1 548 608     DE-A1- 10 005 424**
**US-B1- 6 415 272**

• **SATPATI B ET AL: "Robust controller design for course changing / course keeping control of a ship using PSO enabled automated quantitative feedback theory", TENCON 2008 - 2008, TENCON 2008. IEEE REGION 10 CONFERENCE, IEEE, PISCATAWAY, NJ, USA, 19. November 2008 (2008-11-19), Seiten 1-6, XP031414493, ISBN: 978-1-4244-2408-5**

**Beschreibung**

Die gegenständliche Erfindung betrifft ein Verfahren zum Entwerfen eines nichtlinearen Reglers für nichtlineare Prozesse die in Form eines lokalen Modellnetzwerkes modelliert sind

Lineare Regler, wie z.B. PID-Regler (proportional integral derivative controller), sind weit verbreitet zur Regelung linearer Systeme. Konventionelle lineare Regler funktionieren aber nur unbefriedigend für nichtlineare System. Allerdings sind die meisten realen Prozesse nichtlinear. Daher wurde schon vorgeschlagen, nichtlineare System durch lokale Linearisierungen anzunähern, wobei für die lokalen linearen Systeme lineare Regler entworfen werden können. Solche lokalen Linearisierungen eines nichtlinearen Systems erfolgen z.B. mit Mehrfachmodellansätzen, z.B. lokale Modellnetzwerke (local model networks, LMN). Die Verwendung eines lokalen Modellnetzwerkes (LMN) ist hierzu ein bekanntes Verfahren, bei dem zwischen verschiedenen lokalen Modellen, die in verschiedenen Betriebsbereichen (Eingangsgrößen) gültig sind, interpoliert wird. Für die verschiedenen lokalen Modelle werden dann lineare Regler, wie z.B. PID-Regler, entworfen, wobei der globale Reglerausgang wiederum durch Interpolation der lokalen Reglerausgänge ermittelt wird. Ein alternativer Ansatz stellen Modellierungen mit neuronalen Netzwerken oder Fuzzy Logik dar.

Ein entscheidendes Kriterium bei jedem geregelten System ist die Stabilität des geschlossenen Regelkreises. Ein entworfener Regler muss im Regelkreis daher ein bestimmtes Stabilitätskriterium, wie z.B. ein bekanntes bounded-input-bounded-output (BIBO) oder ein Lyapunov Kriterium, erfüllen.

Ebenso ist es wünschenswert, dass ein gewünschtes Verhalten des geschlossenen Regelkreises über den gesamten Ausgangsgrößenbereich erzielt wird, dass also z.B. in bestimmten Ausgangsgrößenbereichen keine unerwünscht hohen Regelabweichungen oder ein Überschwingen entstehen.

Die EP 1 548 608 A2 beschreibt nichtlineare Prozesse, die mit linearen Reglern, z.B. ein PID-Regler, geregelt werden. Die Parameter des linearen Reglers werden durch eine multikriterielle Optimierung mittels eines evolutionären Algorithmus gewonnen. Hierzu werden Qualitätswerte definiert, die jeweils das Verhalten des Regelkreises bewerten. Durch die Optimierung werden folglich Eigenschaften des Verhaltens des Regelkreises gegeneinander bewertet.

Im normalen Reglerentwurf wird die Stabilität und das Verhalten des geschlossenen Regelkreises überprüft, nachdem der Regler designt wurde. Sollte ein Qualitätswert nicht erfüllt sein, so muss der Reglerentwurf wiederholt werden, was in der Praxis natürlich aufwendig und ineffektiv ist. Weiters ist daher keine Optimierung der beiden Qualitätswerte Stabilität und Verhalten des geschlossenen Regelkreises schon beim Reglerentwurf möglich, bzw. nur sehr aufwendig umzusetzen.

Es ist daher eine Aufgabe der gegenständlichen Erfindung ein Verfahren zum Entwerfen eines nichtlinearen Reglers für nichtlineare Systeme, die in Form eines lokalen Modellnetzwerkes modelliert sind, anzugeben, bei dem bestimmte Qualitätswerte für den geschlossenen Regelkreises berücksichtigt werden können.

Diese Aufgabe wird erfindungsgemäß dadurch gelöst, dass ein Parameterset des Reglers mittels einer Optimierung mit einem multikriteriellen evolutionären Algorithmus bestimmt werden, bei dem in jedem Evolutionsschritt eine Vielzahl von Parametersets, die jeweils eine mögliche Lösung der Optimierung darstellen, ermittelt werden und dabei für jedes Parameterset ein Qualitätswert für die Stabilität des Regelkreises und ein Qualitätswert für das Verhalten des Regelkreises ermittelt werden und diese Qualitätswerte durch den multikriteriellen evolutionären Algorithmus optimiert werden. Auf diese Weise werden die gewünschten Qualitätswerte schon beim Reglerentwurf berücksichtig und nicht erst nach dem Reglerentwurf ermittelt. Die Qualitätswerte werden dabei aber nicht nur berücksichtigt, sondern im Zuge des Reglerentwurfs auch optimiert, sodass der entworfene Regler bzgl. dieser Qualitätswerte sogar ein Optimium, also ein diesbezüglich bestmögliches Reglerdesign, darstellt.

Vorteilhaft werden als Qualitätswerte ein Qualitätswert für die Stabilität des Regelkreises und ein Qualitätswert für das Verhalten des Regelkreises ermittelt und optimiert, da das übliche Kriterien für die Beurteilung eines Regelkreises sind. Dazu wird der Qualitätswert für die Stabilität des Regelkreises bevorzugt mit einem Lyapunovkriterium mit einer Abklingrate ermittelt, wobei als Qualitätswert die Abklingrate verwendet wird. Für den Qualitätswert des Verhaltens des Regelkreises wird ein Sollwertsignal und ein zulässiger Toleranzbereich der Ausgangsgröße um das Sollwertsignal definiert und als Qualitätswert ein Maß für das Einhalten dieses Toleranzbereichs verwendet.

Ganz besonders vorteilhaft kann aus dem ermittelten nichtlinearen Regler für einen ermittelten Reglerparameter ein Kennfeld erstellt werden, das dann z.B. in einem Steuergerät in einem Fahrzeug zur Regelung von bestimmten Größen verwendet werden kann. Auf diese Weise lassen sich Kennfelder in Fahrzeugsteuergeräten direkt ermitteln und bedaten und müssen nicht mehr mühsam am Prüfstand kalibriert werden, wozu bisher auch immer eine Vielzahl von Prüfläufen mit dem Prüfling (z.B. Verbrennungsmotor, Getriebe, Antriebsstrang, Fahrzeug) notwendig waren. Dazu kann als Ergebnis der Optimierung eine Paretofront mit möglichen optimalen Reglerparametern ermittelt werden und davon ein Parameterset als Lösung ausgewählt werden. Diese kann dann z.B. durch einen Prüflauf am Prüfstand für einen Prüfling überprüft werden.

Die gegenständliche Erfindung wird nachfolgend unter Bezugnahme auf die Figuren 1 bis 11 näher erläutert, die beispielhaft, schematisch und nicht einschränkend vorteilhafte Ausgestaltungen der Erfindung zeigen. Dabei zeigt

Fig.1 ein Beispiel eines lokalen Modellnetzwerkes,

Fig.2 ein lokales Modellnetzwerk mit einem lokalen Reglernetzwerk,

Fig.3 ein Blockschaltbild eines Regelkreises,

Fig.4 ein Blockschaltbild des Regelkreises in Zustandsraumdarstellung,

Fig.5 eine schematische Darstellung des Ablaufs des Reglerdesigns,

Fig.6 ein Bespiel für die Ermittlung des Qualitätswertes für das Verhalten des Regelkreises,

Fig.7 die Lösungen des Reglerdesigns in Form einer Paretofront,

Fig.8 das Ergebnis der Regelung eines nichtlinearen Prozesses mit dem entworfenen nichtlinearen Regler und

Fig.9 bis 11 Beispiele von Kennfeldern der Reglerparameter.

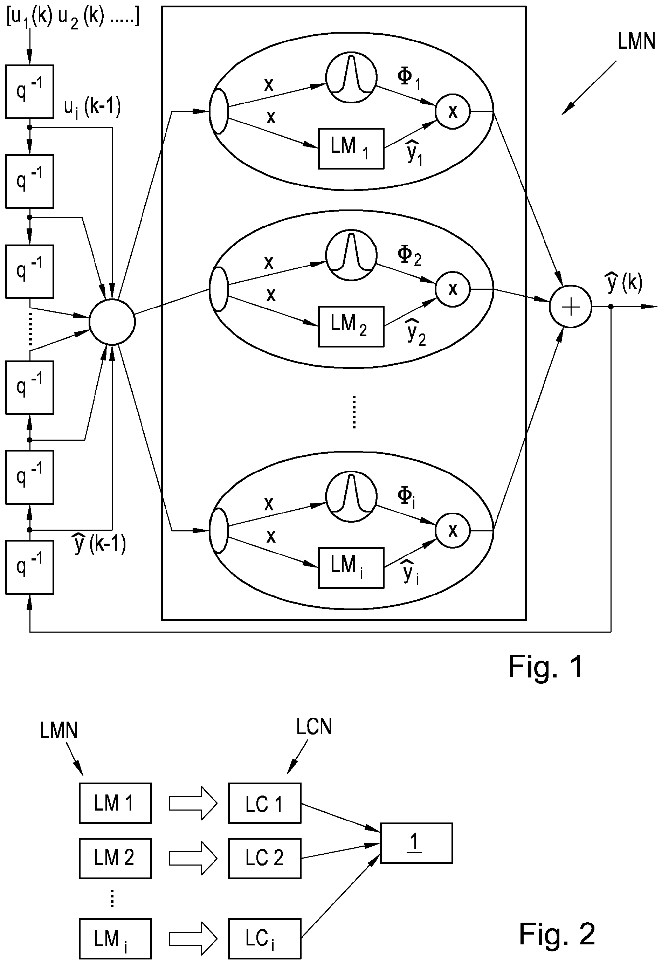

Das Ziel der gegenständlichen Erfindung ist, einen nichtlinearen Regler für eine nichtlineare Regelstrecke bzw. einen nichtlinearen Prozess zu entwerfen. Dazu wird zuerst davon ausgegangen, dass der nichtlineare Prozess in Form eines zeitdiskreten, lokalen Modellnetzwerkes (LMN) modelliert ist. LMN sind hinlänglich bekannt und es gibt umfangreiche Literatur zu Methoden zur Identifikation eines nichtlinearen Prozesses mittels eines LMN, weshalb hier in Fig.1 nur kurz darauf eingegangen wird. Ein LMN interpoliert zwischen lokalen Modellen $LM_i$, die jeweils in bestimmten Betriebsbereichen (bzw. Bereichen der Eingangsgrößen $u_i$) Gültigkeit haben. Dabei kann jedes i-te lokale Modell $LM_i$ des LMN aus zwei Teilen bestehen, nämlich aus einer Gültigkeitsfunktion $\Phi_i$ und einem Modellparametervektor $\theta_i$. Der Modellparametervektor $\theta_i$ umfasst alle Parameter für das i-te Modell und die Gültigkeitsfunktion $\Phi_i$ definiert den Gültigkeitsbereich des i-ten lokalen Modells innerhalb des Partitionierungsraumes, der ein Unterraum des Eingangsraumes ist. Ein lokaler Schätzwert der Ausgangsgröße $\hat{y}_i(k)$ als Ausgang des i-ten lokalen Modells $LM_i$ zum Zeitpunkt k ergibt sich aus $\hat{y}_i(k) = x^T(k)\theta_i$, wobei x(k) einen Regressionsvektor bezeichnet, der gegenwärtige (k) und vergangene (k-n) Ein- und Ausgänge $u_i$, $\hat{y}_i(k)$ enthält. Der globale Modellausgang $\hat{y}(k)$ ergibt sich dann aus einer Linearkombination mit einer Wichtung der M lokalen Modellausgänge durch die Gültigkeitsfunktion $\Phi_i$ in der Form $\hat{y}(k) = \sum_{i=1}^{M} \Phi_i(k)\hat{y}_i(k)$.

Für jedes lokale Modell $LM_i$ wird nun ein lokaler, linearer Regler $LC_i$ erstellt, wie in Fig.2 dargestellt. Daraus ergibt sich ein lokales Reglernetzwerk (LCN). Der globale nichtlineare Regler 1 ergibt sich dann wieder durch Linearkombination der lokalen linearen Regler $LC_i$ in Abhängigkeit von deren Gültigkeitsbereichen, ähnlich wie im LMN.

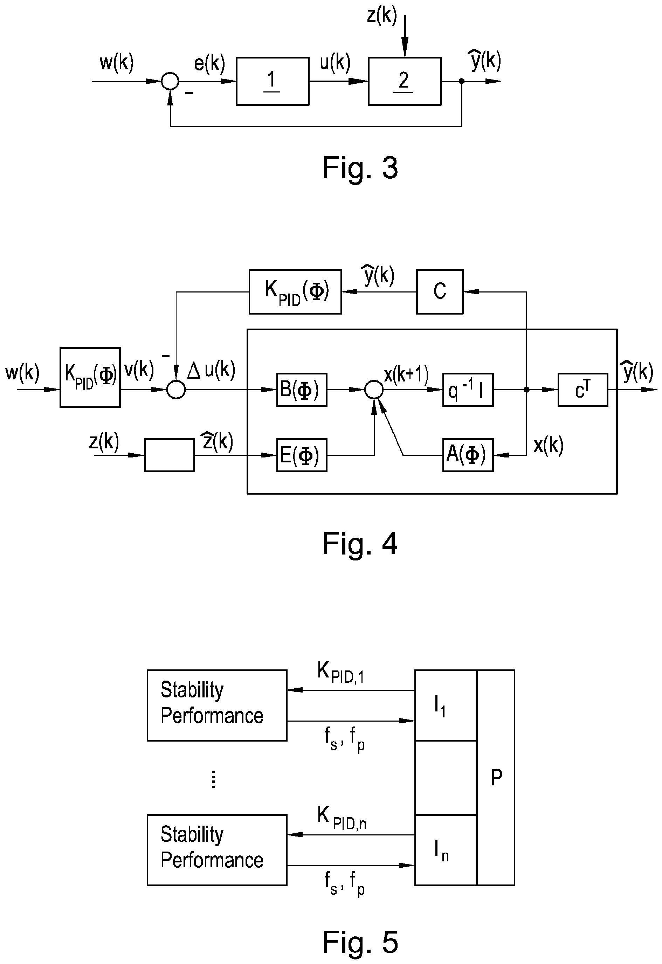

Der Regelkreis ergibt sich dann bekanntermaßen wie in Fig.3 dargestellt. Die Ausgangsgröße $\hat{y}(k)$ wird auf den Eingang rückgeführt und von einem Sollwert w(k) abgezogen, woraus sich eine Regelabweichung e(k) ergibt, die dem Regler 1 zugeführt wird, der daraus eine Stellgröße u(k) (=Modelleingang) für den nichtlinearen Prozess 2 bzw. das den Prozess modellierende LMN berechnet. Zusätzlich können noch Störgrößen z(k) Berücksichtigung finden. Das bekannte zeitdiskrete lineare Regelgesetz ergibt sich bekanntermaßen zu $u(k) = u(k-1) + d_0e(k) + d_1e(k) + d_0e(k-1)$ + $d_2e(k-2)$ mit den Koeffizienten $d_0 = K_P\left[1 + \frac{T_V}{T_S}\right]$, $d_1 = K_P\left[\frac{T_S}{T_N} - \frac{2T_V}{T_S} - 1\right]$ und $d_2 = K_P\frac{T_V}{T_S}$. Dabei sind $K_P$, $T_N$ und $T_V$ die Reglerparameter und $T_N$ die Samplingzeit. Mit $e(k) = w(k) - \hat{y}(k)$ kann dieses Regelgesetz umformuliert werden. Für einen i-ten lokalen PID-Regler folgt dann das zeitdiskrete lineare Regelgesetz zu $u^{(i)}(k) = u^{(i)}(k-1) + K_{PID}^{(i)}(k)w^{(i)}(k) - K_{PID}^{(i)}(k)\hat{y}^{(i)}(k)$, wobei die Matrix $K_{PID}^{(i)}(k)$ die Reglerparameter $K_P$, $T_N$ und $T_V$ der einzelnen lokalen PID-Regler enthält. Die globale Matrix der Reglerparameter $K_{PID}(k)$ ergibt sich dann wieder in Anlehnung an das LMN als Linearkombination aus $K_{PID}(k) = \sum \Phi_i K_{PID}^{(i)}(k)$. Damit ergeben sich für unterschiedliche Eingangsgrößen unterschiedliche Reglerparameter $K_{PID}(k)$ des nichtlinearen Reglers 1.

Bekanntermaßen kann das Regelgesetz äquivalent in die Zustandsraumdarstellung mit dem Zustand x (nicht zu verwechseln mit dem Regressionsvektor x aus dem LMN) gebracht werden, in der Form $x(k+1) = A(\Phi)x(k) + B(\Phi)\Delta u(k) + E(\Phi)\hat{z}(k)$, $\hat{y}(k) = Cx(k)$. Mit der Systemmatrix $A(\Phi) = \sum \Phi_i A_i(k)$, der Eingangsmatrix $B(\Phi) = \sum \Phi_i B_i(k)$, der Störmatrix $E(\Phi) = \sum \Phi_i E_i(k)$ und der Ausgangsmatrix C. $\Delta u(k)$ ergibt sich aus $\Delta u(k) = K_{PID}(k)w(k) - K_{PID}(k)y(k)$. Die Zustandsraumdarstellung ist beispielhaft in Fig.4 dargestellt. Um die Anzahl der Zustandsgrößen klein zu halten, werden die Zeitverschiebungen der Störgrößen extern durchgeführt (angedeutet durch den Block der die Störgrößen z(k) erhält). Die Störmatrix E beinhaltet die zugehörigen Modellparameter. Ebenso existieren auch für andere lineare Regler äquivalente Regelgesetze und Zustandsraumdarstellungen. Das ist Standardregelungstheorie, weshalb hier nicht näher darauf eingegangen wird.

Die Reglerparameter $K_{PID}(k)$ des oben definierten linearen Reglers 1 werden nun mittels eines multikriteriellen evolutionären Algorithmus ermittelt. Solche Algorithmen sind ebenfalls hinlänglich bekannt, z.B. als multikriterieller genetischer Algorithmus (multi-objective Genetic Algorithm oder kurz multiGA). Allgemein arbeiten evolutionäre Algorithmen analog zur natürlichen Evolution, wo sich stärkere Individuen mit höherer Wahrscheinlichkeit durchsetzen. Die "Stärke" eines Individuums wird dabei mit Qualitätswerten $f_i$ (fitness function) gemessen. In jedem Schritt des multikriteriellen evolutionären Algorithmus werden eine Vielzahl von Individuen erzeugt und für jedes Individuum die dafür definierten Qualitätswerte $f_i$ berechnet. Bei der Erzeugung der neuen Individuen kommen zwei Mechanismen, wie in der Natur, zu tragen: Vererbung und Mutation. Die Individuen einer Generation werden, gemischt und neu kombiniert, um die nächste Generation von Individuen zu erstellen. Aufgrund der Qualitätswerte $f_i$ haben dabei bessere Individuen einen höhere Chance ihre Gene (Reglerparameter) an die nächste Generation zu vererben (der bessere setzt sich durch). Bei der Mutation handelt es sich um eine zufällige Änderung der genetischen Information (Reglerparameter). Die Optimierung zielt dabei in der Regel auf eine Minimierung der Qualitätswerte $f_i$ ab, wobei auch die Maximierung das Optimierungsziel sein kann. Solche Algorithmen sind hinlänglich bekannt und es findet sich dazu auch ausreichend Literatur, z.B. K. Deb, "Multi-objective optimization using evolutionary algorithms", Cinchester: John Wiley & Sons Ltd., 2009 oder L. D. Li, X. Yu, X. Li, and W. Guo, "A Modified PSO Algorithm for Constrained Multi-objective Optimization", presented at the International Conference on Network and System Security, 2009, pp. 462-467.

Im konkreten Anwendungsfall, dargestellt in Fig.5, stellt ein Parameterset $K_{PID}(k)$ des Reglers 1 dabei ein Individuum dar und als Qualitätswerte $f_s$, $f_p$ werden ein Stabilitätskriterium und ein Kriterium für das Verhalten des Regelkreises verwendet. Zur Initialisierung können beliebige Parameter $K_{PID}(k)$ vorgegeben werden. Zur Initialisierung kann man sich aber auch vorhandener Methoden bedienen, wie z.B. dem bekannten Kommando pidtune aus MATLAB®, das eine gute Ausgangsbasis der Reglerparameter $K_{PID}(k)$ für den multikriteriellen evolutionären Algorithmus ermittelt. In jedem Schritt des evolutionären Algorithmus wird ein Pool an Individuen $I_1 ... I_n$ ermittelt, die in Summe die Population P des evolutionären Algorithmus darstellen. Zu jedem einzelnen Individuum jedes Pools an Individuen $I_1 ... I_n$ werden dann die Qualitätswerte $f_s$, $f_p$ ermittelt. Anhand der Qualitätswerte $f_s$, $f_p$ werden dann nach den Regeln des multikriteriellen evolutionären Algorithmus die Individuen der nächsten Generation ermittelt. Der Abbruch der Optimierung erfolgt entweder nach einer vorgegebenen Anzahl von Generationen oder bei Erreichen von gewünschten Qualitätswerten $f_s$, $f_p$.

Für die beiden Qualitätswerte $f_s$, $f_p$ für die Beurteilung der Stabilität und des Verhaltens des geschlossenen Regelkreises werden nun z.B. die folgenden Ansätze gemacht.

Für die Stabilität wird z.B. ein bekannter Ansatz nach Lyapunov auf Basis der obigen Zustandsraumdarstellung gemacht, bei dem eine Lyapunovfunktion V(x) gesucht wird, die die folgenden Anforderungen erfüllt:

i) $V(\underline{x}(k) = 0) = 0$
ii) $V(x(k)) > 0$ for $x(k) \neq 0$
iii) $V(x(k)) \rightarrow \infty$ for $\|x(k)\| \rightarrow \infty$
iv) $\Delta V(x(k)) = V(k + 1) - \alpha^2 V(k) \leq 0$

Für LMN ist es dabei üblich, die Lyapunovfunktion V(x) auf quadratische Funktionen $V(k)=\mathbf{x}^T(k)\mathbf{P}\mathbf{x}(k)>0$ mit $P \succ 0$ zu beschränken. Dabei ist P eine positive definite Matrix und $\alpha$ ein Abklinggrad. Alternativ dazu kommen natürlich auch andere bekannte Lyapunovfunktionen in Frage, wie z.B. stückweise quadratische oder Fuzzy Lyapunov Funktionen.

Das Kriterium für die Stabilität ergibt sich dann für eine quadratische Lyapunovfunktion V(x) zu:

$$P \succ 0$$

$$\inf \left\{ 0 < \alpha < 1 : \Lambda_{ii}^T P \Lambda_{ii}^T + X_{ii} \prec \alpha^2 P \right\}$$

$$\inf \left\{ 0 < \alpha < 1 : \Lambda_{ij}^T P \Lambda_{ij}^T + X_{ij} \prec \alpha^2 P \right\}$$

mit

$$\widetilde{X} = \begin{pmatrix} X_{11} & X_{12} & \dots & X_{1I} \\ X_{12} & X_{22} & \dots & X_{2I} \\ \vdots & & \ddots & \vdots \\ X_{1I} & X_{2I} & \cdots & X_{II} \end{pmatrix} \succ 0$$

$$\forall i \in \mathfrak{J}, \forall i < j \le 1$$

$$\Lambda_{ii} = G_{ii}, \Lambda_{ij} = \frac{G_{ij} + G_{ji}}{2},$$

$$G_{ij} = A_i - B_i K_{PID,j}^T C$$

$$G_{ii} = A_i - B_i K_{PID,i}^T C$$

Das mit dem Regler 1 geregelte LMN ist exponentiell stabil, wenn es symmetrische Matrizen P und $X_{ij}$ und einen Abklinggrad $\alpha$ gibt, mit denen die obigen Bedingungen erfüllt sind. Das obige Gleichungssystem kann mit verfügbaren Gleichungslösern gelöst werden, wobei als Qualitätswert $f_s$ für die Stabilität hier der Abklinggrad $\alpha$ verwendet wird, also

$$f_s = \alpha(K_{PID,i}^T, \forall i \in \mathfrak{J}).$$

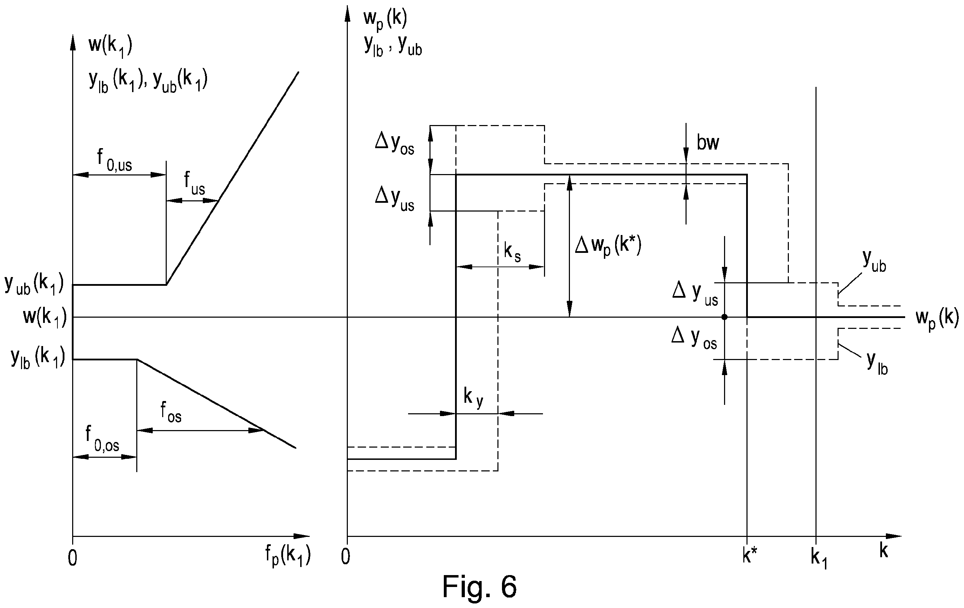

Für das Verhalten des geschlossenen Regelkreises wird zuerst für den Ausgang $\hat{y}(k)$ ein Sollwertsignal $w_p(k)$ mit zeitlicher Länge K erzeugt, z.B. mit einer Design of Experiment Methode, das vorzugsweise den gesamten Ausgangsbereich des LMN abdeckt, um das globale Verhalten des geschlossenen Regelkreises zu erfassen. Der Qualitätswert $f_p$ für das Verhalten des geschlossenen Regelkreises basiert dann auf oberen und unteren Grenzwerten $y_{ub}$, $y_b$ zum Referenzsignal $w_p(k)$ und herkömmlichen Verhaltenskriterien, wie z.B. Überschwingen $\Delta y_{os}$, Unterschwingen $\Delta y_{us}$, Anstiegszeit $k_r$, Einschwingzeit $k_s$ und Bandbreite $b_w$. Es wird also ein zulässiger Toleranzbereich um das Sollwertsignal $w_p$ definiert. Der erlaubte Bereich der Ausgangsgröße wird dabei zwischen oberem und unterem Grenzwert $y_{ub}$, $y_{lb}$, also innerhalb des Toleranzbereichs, definiert, wie in Fig.6 beispielhaft dargestellt. Der Qualitätswert $f_p$ ergibt sich dann aus

$$f_p = \sum_{k=1}^{K} f_p(k)$$

mit

$$f_p(k) = \begin{cases} f_{0,os} + f_{os} & sign(\Delta w_p(k^*))(y(k) - y_{ub}(k)) > 0 \\ 0 & y_{lb}(k) \le y(k) \le y_{ub}(k) \\ f_{0,us} + f_{us} & sign(\Delta w_p(k^*))(y(k) - y_{lb}(k)) > 0 \end{cases}$$

und

$$f_{os} = \begin{cases} c_{os}\left|y(k) - y_{ub}(k)\right| & sign(\Delta w_p(k^*)) = 1 \\ c_{os}\left|y(k) - y_{lb}(k)\right| & sign(\Delta w_p(k^*)) = -1 \end{cases}$$

$$f_{us} = \begin{cases} c_{us}\left|y(k) - y_{ub}(k)\right| & sign(\Delta w_p(k^*)) = -1 \\ c_{us}\left|y(k) - y_{lb}(k)\right| & sign(\Delta w_p(k^*)) = 1 \end{cases}.$$

Die Koeffizienten $c_{os}$ und $c_{us}$ beschreiben den Anstieg des Qualitätswertes $f_p$ wenn der Systemausgang $\hat{y}(k)$ den zulässigen Bereich zwischen den Grenzwerten $y_{ub}$, $y_{lb}$ verlässt. Der Qualitätswert $f_p$ für das Verhalten des Regelkreises ist damit ein Maß für das Einhalten des Toleranzbereichs. Für die Bestimmung des Qualitätswertes $f_p$ wird der Regelkreis (Fig.3) für jedes Parameterset $K_{PID}$ $(k)$ mit dem Sollwertsignal $w_p$ beaufschlagt. Die Grenzwerte $y_{ub}$, $y_{lb}$ werden mit Hilfe von üblichen Parametern wie Anstiegszeit $k_r$, Einschwingzeit $k_s$, Überschwingen $\Delta y_{os}$, Unterschwingen $\Delta y_{us}$ und Bandbreite $b_w$ bestimmt bzw. vorgegeben, z.B. von einem Anwender.

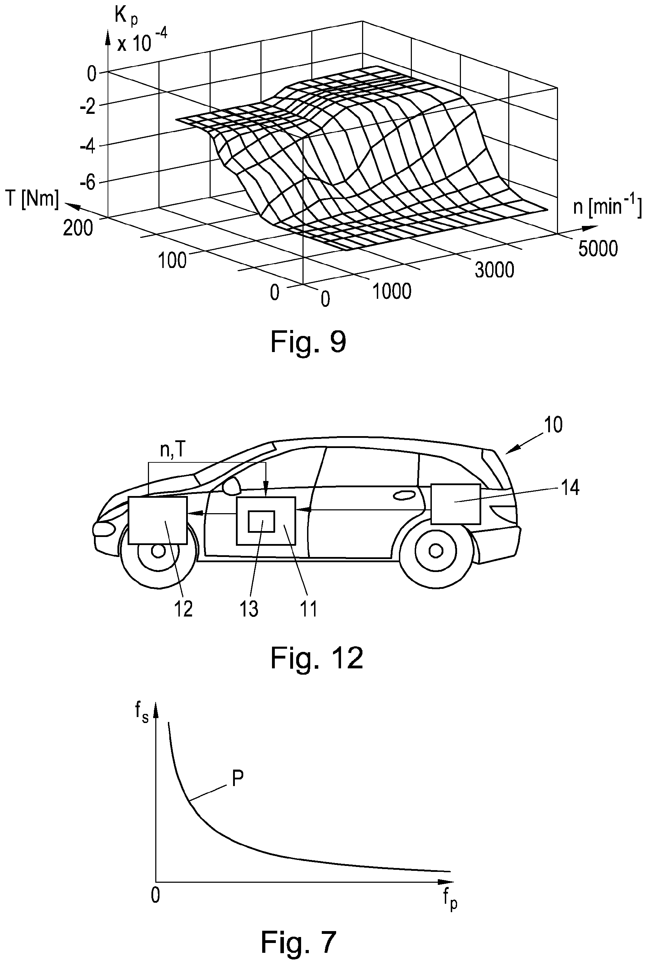

Durch den multikriteriellen evolutionären Algorithmus können mehrere Qualitätswerte $f_i$ optimiert (minimiert oder maximiert) werden und zugehörige Parametersets $K_{PID}(k)$ bestimmt werden, wobei es mehrere mögliche optimale Lösungen gibt. Die Menge der optimalen Lösungen kann dabei als Paretofront dargestellt werden. Die Paretofront enthält bekanntermaßen alle Lösungen, bei denen es nicht möglich ist einen Qualitätswert $f_i$ zu verbessern, ohne damit gleichzeitig einen anderen Qualitätswert $f_i$ zu verschlechtern. Für den Fall der beiden Qualitätswerte $f_s$, $f_p$ ergibt sich z.B. eine Paretofront P, wie in Fig. 7 dargestellt. Hinter jedem Punkt der Paretofront P steht ein zugehöriges Parametersets $K_{PID}(k)$ des Reglers 1, das jeweils eine mögliche optimale Lösung des Reglerdesigns darstellt. Es verbleibt somit nur mehr, eine bestimmte Lösung und damit ein bestimmtes Parameterset $K_{PID}(k)$ aus den möglichen optimalen Lösungen auszuwählen.

Zusätzlich könnten die verschiedenen Qualitätskriterien $f_i$ in der Optimierung auch noch gewichtet werden, um deren Bedeutung zu bewerten.

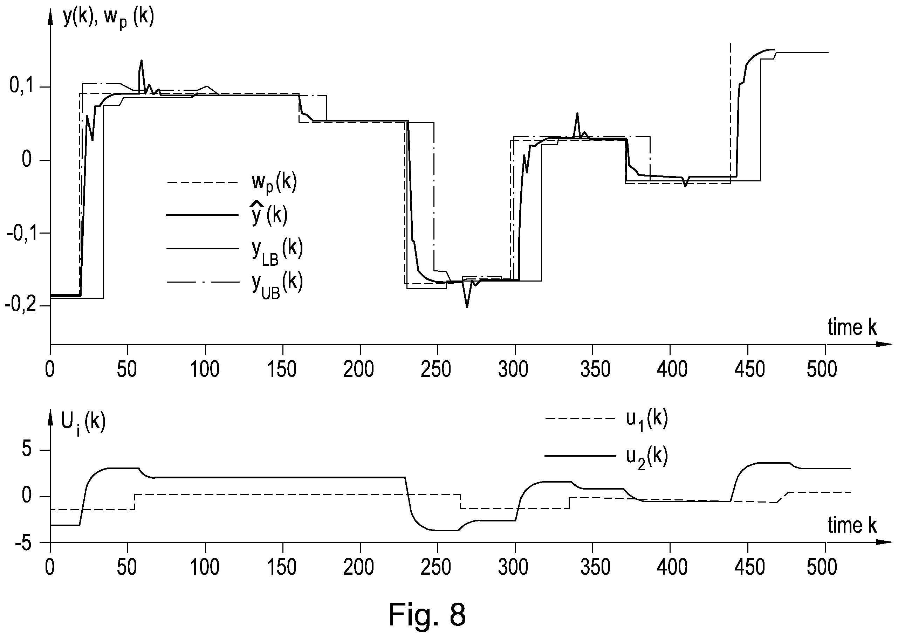

In Fig.8 ist das Ergebnis des Designs eines PID-Reglers nach dem obigen Verfahren dargestellt. Im obigen Diagramm ist der Sollwert $w_p(k)$ und die Ausgangsgröße $\hat{y}(k)$, gemeinsam mit den Grenzwerten $y_{ub}$, $y_{lb}$ für den Qualitätswert $f_p$ dargestellt. Im unteren Diagramm sind die Eingangsgrößen $u_1$ und $u_2$ dargestellt. Man erkennt die gute Annäherung der Sollwertvorgabe durch den designten Regler.

Das Verfahren wird vorzugsweise auf einem Computer, der programmiert ist, das Verfahren umzusetzen, ausgeführt. Alternativ kann auch ein Computer-Cluster verwendet werden, um die benötigte Rechenleistung auf mehrere Computer aufzuteilen.

Der ermittelte nichtlineare Regler könnte dann z.B. in einer Steuereinheit implementiert werden, um in Abhängigkeit von den Eingangsgrößen in Echtzeit die Stellgrößen zu ermitteln, um den nichtlinearen Prozess zu regeln.

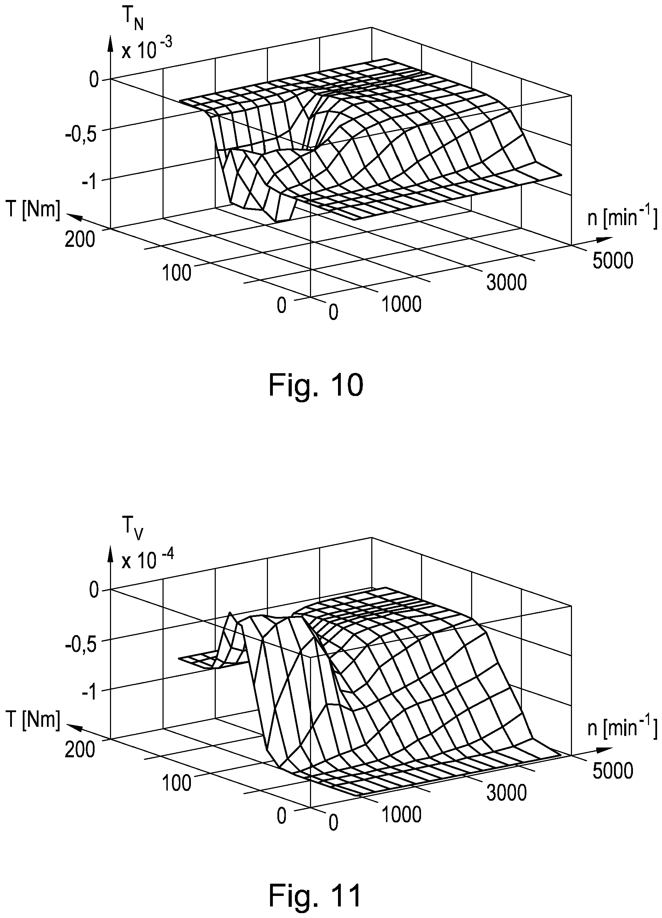

Aus dem ermittelten nichtlinearen Regler 1 bzw. dem ermittelten Parameterset $K_{PID}(k)$ können aber auch in Abhängigkeit von den Eingangsgrößen Kennfelder für die Reglerparameter $K_P$, $T_N$ und $T_V$ (bzw. $d_0$, $d_1$, $d_2$) ermittelt bzw. bedatet werden. Die Methode findet zum Beispiel im automotiven Umfeld bei Steuergeräten 11 von Verbrennungsmotoren 12 in Fahrzeugen 10 Verwendung (Fig.12), wo die Struktur der im Steuergerät 11 implementierten Kennfelder 13 vorgegeben ist und im Zuge der Kalibrierung die Kennfelder 13 mit Daten zu füllen sind. In der vorgegebenen Reglerstruktur der Steuergeräte 11 werden Kennfelder für die Reglerparameter verwendet, welche meist von Last (Einspritzmenge des Kraftstoffs oder Drehmoment T) und Drehzahl n abhängig sind. Dabei können auch noch andere Größen mit Sensoren 14 erfasst und dem Steuergerät geliefert werden. Die Methode erlaubt eine modellbasierte vollautomatische Generierung dieser Kennfelder 13. Mit dieser kennfeldbasierten Reglerstruktur wird z.B. der Ladedruck mit Hilfe von Turbolader und/oder Abgasrückführung geregelt. Dazu kann der nichtlineare Regler für die nichtlineare Strecke ermittelt werden. Mit Hilfe des Reglers lassen sich dann die gesuchten Kennfelder 13 der Reglerparameter $K_P$, $T_N$ und $T_V$ ermitteln. In den Figs. 9 bis 11 sind beispielhaft die derart ermittelten Kennfelder 13 für die Reglerparameter $K_P$, $T_N$ und $T_V$ in Abhängigkeit von den Eingangsgrößen Drehmoment T und Drehzahl n dargestellt. Alternativ könnten Kennfelder für die Parameter $d_0$, $d_1$, $d_2$ erstellt werden.

**Patentansprüche**

1. Verfahren zum Entwerfen eines nichtlinearen Reglers (1) für nichtlineare Prozesse die in Form eines lokalen Modellnetzwerkes (LNN) modelliert sind, **dadurch gekennzeichnet, dass** das Parameterset ($K_{PID}(k)$) des Reglers (1) mittels einer Optimierung mit einem multikriteriellen evolutionären Algorithmus bestimmt werden, bei dem in jedem Evolutionsschritt eine Vielzahl von Parametersets ($K_{PID}(k)$), die jeweils eine mögliche Lösung der Optimierung darstellen, ermittelt werden und dabei für jedes Parameterset ($K_{PID}(k)$) ein Qualitätswert ($f_s$) für die Stabilität des Regelkreises und ein Qualitätswert ($f_p$) für das Verhalten des Regelkreises ermittelt werden und diese Qualitätswerte ($f_s$, $f_p$) durch den multikriteriellen evolutionären Algorithmus optimiert werden.

**2.** Verfahren nach Anspruch 1, **dadurch gekennzeichnet, dass** der Qualitätswert ($f_s$) für die Stabilität des Regelkreises mit einem Lyapunovkriterium mit einer Abklingrate ($\alpha$) ermittelt wird, wobei als Qualitätswert ($f_s$) die Abklingrate ($\alpha$) verwendet wird.

**3.** Verfahren nach Anspruch 1 oder 2, **dadurch gekennzeichnet, dass** ein Sollwertsignal ($w_p$) und ein zulässiger Toleranzbereich der Ausgangsgröße ($\hat{y}(k)$) um das Sollwertsignal ($w_p$) definiert werden und als Qualitätswert ($f_p$) für das Verhalten des Regelkreises ein Maß für das Einhalten des Toleranzbereichs verwendet wird.

**4.** Verfahren nach einem der Ansprüche 1 bis 3, **dadurch gekennzeichnet, dass** als Ergebnis der Optimierung eine Paretofront (P) mit möglichen optimalen Parametersets ($K_{PID}(k)$) ermittelt wird und davon ein Parameterset ($K_{PID}(k)$) als Lösung ausgewählt wird.

**5.** Verfahren nach einem der Ansprüche 1 bis 4, **dadurch gekennzeichnet, dass** für einen Parameter ($d_0$, $d_1$, $d_2$, $K_P$, $T_N$, $T_V$) des Parametersets ($K_{PID}(k)$) ein Kennfeld in Abhängigkeit von den Eingangsgrößen erstellt wird.

**Claims**

**1.** Method for designing a non-linear controller (1) for non-linear processes which are modelled in the form of a local model network (LMN), **characterized in that** the parameter set ($K_{PID}(k)$) of the controller (1) is determined by means of an optimization using a multi-criteria evolutionary algorithm, in which algorithm a plurality of parameter sets ($K_{PID}(k)$), which each represent a possible solution of the optimization, are determined in each evolution step and in doing so a quality value ($f_s$) for the stability of the control loop and a quality value ($f_p$) for the behavior of the control loop are determined for each parameter set ($K_{PID}(k)$) and these quality values ($f_i$) are optimized by the multi-criteria evolutionary algorithm.

**2.** Method according to claim 1, **characterized in that** the quality value ($f_s$) for the stability of the control loop is determined using a Lyapunov criterion with a decay rate ($\alpha$), whereat the decay rate ($\alpha$) is used as quality value ($f_s$).

**3.** Method according to one of claims 1 or 2, **characterized in that** a desired value signal ($w_p$) and a permissible tolerance range of the output variable ($\hat{y}(k)$) around the desired value signal ($w_p$) are defined and a measurement for complying with this tolerance range is used as a quality value ($f_p$).

**4.** Method according to one of claims 1 to 3, **characterized in that** as a result of the optimization a Pareto front (P) with possible optimal parameter sets ($K_{PID}(k)$) is determined and a parameter set ($K_{PID}(k)$) is selected therefrom as a solution.

**5.** Method according to one of claims 1 to 4, **characterized in that** for a parameter ($d_0$, $d_1$, $d_2$, $K_P$, $T_N$, $T_V$) of the parameter set ($K_{PID}(k)$) a characteristic map is created as a function of the input variables.

**Revendications**

**1.** Procédé de conception d'un régulateur non linéaire (1) pour processus non linéaires qui sont modélisés sous la forme d'un réseau modèle local (LNN), **caractérisé en ce que** l'ensemble de paramètres ($K_{PID}(k)$) du régulateur (1) est déterminé au moyen d'une optimisation avec un algorithme évolutionnaire de critères, dans lequel, dans chaque stade d'évolution, une pluralité d'ensembles de paramètres ($K_{PID}(k)$), qui représentent respectivement une solution possible de l'optimisation, est déterminée et, en l'occurrence, pour chaque ensemble de paramètres ($K_{PID}(k)$), une valeur de qualité ($f_s$) pour la stabilité du circuit de régulation et une valeur de qualité ($f_p$) pour le comportement du circuit de régulation sont déterminées et ces valeurs de qualité ($f_s$, $f_p$) sont optimisées par l'algorithme évolutionnaire de critères multiples.

**2.** Procédé selon la revendication 1, **caractérisé en ce que** la valeur de qualité ($f_s$) pour la stabilité du circuit de régulation est déterminée avec un critère de Lyapunov avec un taux de décroissance ($\alpha$), dans lequel on utilise comme valeur de qualité (f$_s$) le taux de décroissance ($\alpha$).

3. Procédé selon la revendication 1 ou 2, **caractérisé en ce qu'**un signal de valeur de consigne (w$_p$) et une zone de tolérance admise de la grandeur de sortie ($\hat{y}$(k)) autour du signal de valeur de consigne (w$_p$) sont définis et l'on utilise comme valeur de qualité (f$_p$) pour le comportement du circuit de régulation une mesure pour le respect de la zone de tolérance.

4. Procédé selon l'une quelconque des revendications 1 à 3, **caractérisé en ce que** l'on détermine comme résultat de l'optimisation un front de Pareto (P) avec des ensembles optimaux possibles de paramètres (K$_{PID}$(k)) et l'on choisit parmi ceux-ci un ensemble de paramètres (K$_{PID}$(k)) comme solution.

5. Procédé selon l'une quelconque des revendications 1 à 4, **caractérisé en ce que** l'on établit pour un paramètre (d$_0$, d$_1$, d$_2$, K$_p$, T$_N$, T$_V$) de l'ensemble de paramètres (K$_{PID}$(k)) un champ caractéristique en fonction des grandeurs d'entrée.

Fig. 1

Fig. 2

Fig. 3

Fig. 4

Fig. 5

Fig. 6

EP 2 962 161 B1

Fig. 8

Fig. 9

Fig. 12

Fig. 7

Fig. 10

Fig. 11

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1548608 A2

**In der Beschreibung aufgeführte Nicht-Patentliteratur**

- **K. DEB.** Multi-objective optimization using evolutionary algorithms. John Wiley & Sons Ltd, 2009

- **L. D. LI ; X. YU ; X. LI ; W. GUO.** A Modified PSO Algorithm for Constrained Multi-objective Optimization. *International Conference on Network and System Security,* 2009, 462-467